# EUROPÄISCHE PATENTSCHRIFT

(11) **EP 0 453 655 B1**
(45) Veröffentlichungstag und Bekanntmachung des Hinweises auf die Patenterteilung: **14.09.1994**
(21) Anmeldenummer: 90125338.5
(22) Anmeldetag: 22.12.1990
(51) Int. Cl.: G02B 6/28

(54) **Lichtmischer**
Light mixer
Mélangeur de lumière

(30) Priorität: 21.04.1990 DE 4012730
(43) Veröffentlichungstag der Anmeldung: 30.10.1991
(73) Patentinhaber: Daimler-Benz Aerospace Aktiengesellschaft, 81663 München (DE)
(72) Erfinder: Poisel, Hans, Dr., W-8060 Dachau (DE); Schreiber, Martina, W-8000 München 19 (DE); Trommer, Gert, Dr., W-8000 München 40 (DE)

(56) Entgegenhaltungen:
- EP-A- 0 241 171
- EP-A- 0 340 987
- DE-A- 2 651 776
- US-A- 4 474 425
- US-A- 4 653 845

## Beschreibung

Die Erfindung betrifft einen Lichtmischer mit einem ersten Array aus einer ersten Anzahl von eingehenden Lichtleitfasern (1.1 - 1.16), deren Enden zeilenweise angeordnet sind, einem zweiten Array aus einer der ersten Anzahl entsprechenden Anzahl von abgehenden Lichtleitfasern (6.1 - 6.16), deren Enden ebenfalls zeilenweise angeordnet sind, und einer Mischerplättcheneinrichtung oder einer integriert-optischen Kopplereinrichtung zur gleichmäßigen Aufteilung von Licht aus jeder eingehenden Lichtleitfaser auf die abgehenden Lichtleitfasern.

Ein derartiger Lichtmischer wird beispielsweise für einen Laserwarnsensor benötigt, dessen einzelnes "Auge" aus einer Matrix von in unterschiedliche Raumrichtungen blickenden Lichtleitfasern besteht. Das von diesem "Auge" aus dem beobachteten Raumwinkel empfangene Licht soll dabei auf verschiedene spektrale Bereiche aufgeteilt werden. Die dazu notwendige Aufteilung des empfangenen Lichtes setzt voraus, daß in jedem Spektralbereich die vollständige Information , d.h. die Beiträge von jeder Lichtleitfaser, vorhanden ist.

Aus der EP-A-0 241 171 ist ein optischer Koppler vom Typ n x n bekannt, der aus einer Vielzahl von kaskadenförmig angeordneten 2 x 2-Kopplern besteht. Ein derartiger Koppler erfüllt zwar grundsätzlich die o.g. Forderungen, wird jedoch zunehmend aufwendiger, wenn mehr als nur vier eingehende bzw. abgehende Lichtleitfasern miteinander verkoppelt werden sollen, wie das in den Ausführungsbeispielen der EP 0 241 171 A2 beschrieben ist.

Aus der US-A-4 474 425 ist ein Lichtmischer mit einem ersten Array aus einer ersten Anzahl von eingehenden Lichtleitfasern bekannt, deren Enden zeilenweise angeordnet sind, sowie mit einem zweiten Array aus einer der ersten Anzahl entsprechenden Anzahl von abgehenden Lichtleitfasern, deren Enden ebenfalls zeilenweise angeordnet sind. Weiterhin ist eine Mischerplättcheneinrichtung zur gleichmäßigen Aufteilung von Licht aus jeder eingehenden Lichtleitfaser auf die abgehenden Lichtleitfasern vorhanden. Aufgrund der flächenhaften Anordnung bestehen grundsätzlich die gleichen Einschränkungen wie bei der obigen EP 0 241 171 A2.

Es ist daher Aufgabe der vorliegenden Erfindung, einen Lichtmischer der oben genannten Art zu schaffen, der in seinem Aufbau einfach und leicht überschaubar und für eine größere Anzahl von Lichtleitern geeignet ist. Die Lösung dieser Aufgabe gelingt durch einen nach den Merkmalen des Patentanspruchs 1 ausgebildeten Lichtmischer.

Die in der Erfindung zur Anwendung kommenden Mischerplättchen werden in der Regel dazu verwendet, das Licht aus einer Lichtquelle mit geringem Durchmesser und Abstrahlkegel, wie z.B. das aus einer Lichtleitfaser austretende Licht, zu verbreitern und gleichmäßig auf eine größere, strahlende Fläche zu verteilen. In diesem Sinne werden auch hier die Mischerplättchen des ersten Stapels , die mit den eingehenden Lichtleitfasern verbunden sind, verwendet. Die Mischerplättchen des zweiten Stapels werden dagegen in "umgekehrter" Weise betrieben, da hier das Licht von den Mischerplättchen in die abgehenden Lichtleitfasern eingekoppelt wird.

Anstelle eines Mischerplättchens kann auch ein integriert-optischer Koppler vom Typ N x N zur Anwendung kommen, wobei hier die Bezeichnung "N x N" charakteristisch für die Anzahl der eingehenden und abgehenden Lichtkanäle ist, d.h. ein derartiger integriert-optischer Koppler ist im wesentlichen flach und enthält auf zwei gegenüberliegenden Seiten N-eingehende bzw. N-abgehende Lichtleitkanäle. Mit einer Anzahl N derartiger Koppler, die zu einem Stapel aufeinander gelegt sind, enthält man dann eine Matrix von N² Lichtleitkanälen. Zwei solcher Stapel werden dann gegeneinander gerichtet und um 90° zueinander verdreht optisch miteinander verbunden.

Die Erfindung wird im folgenden anhand der in den Figuren teilweise schematisch dargestellten Ausführungsbeispiele näher beschrieben. Es zeigen:
- Fig. 1: einen Lichtmischer für 4 x 4 - Lichtleitfasern unter Verwendung von Mischerplättchen und
- Fig. 2: einen Lichtmischer für 4 x 4 - Lichtleitfasern unter Verwendung von integriert-optischen Kopplern.

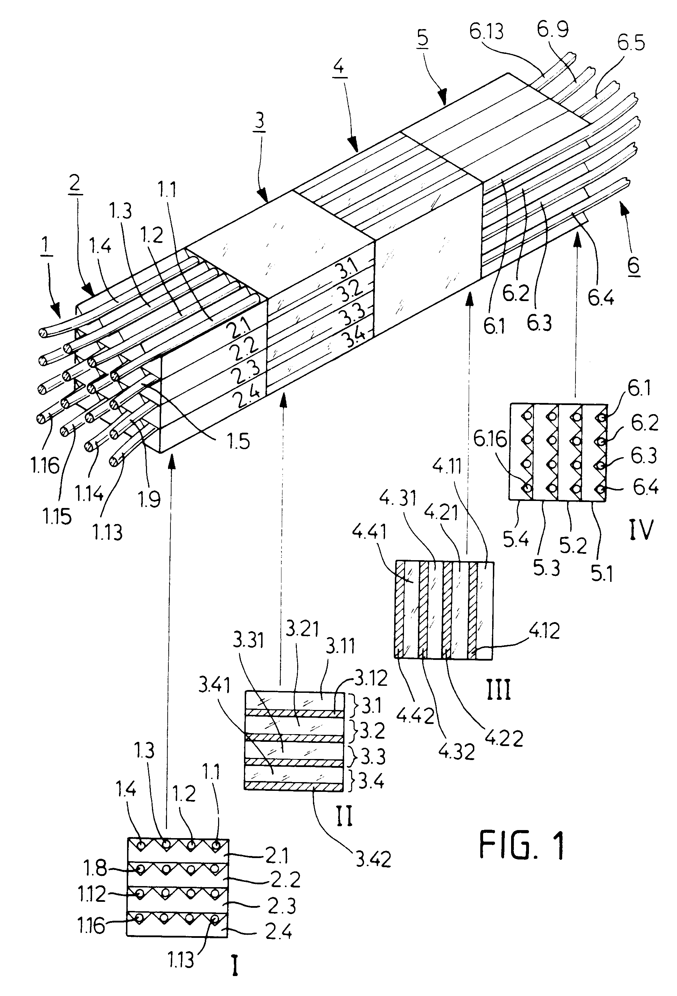

Bei dem in Figur 1 dargestellten Auführungsbeispiel werden 16 Lichtleitfasern 1.1 bis 1.16 zu vier Gruppen à 4 Stück zusammengefaßt. Innerhalb einer Gruppe verlaufen die Lichtleitfasern (z.B. 1.1 bis 1.4) parallel in gleichen Abständen nebeneinander, wobei die einzelnen Gruppen so angeordnet sind, daß die Stirnflächen der Lichtleitfasern innerhalb einer Ebene liegen und darin auf den Gitterplätzen eines quadratischen Gitters angeordnet sind. Hierzu wird jede Gruppe von Lichtleitfasern (z.B. 1.1 bis 1.4) in vier V-förmigen Nuten einer Trägerplatte (z.B. 2.1) eingelegt und dort fixiert. Vier derartiger Trägerplatten 2.1 bis 2.4 werden dann zu einem Stapel deckungsgleich aufeindergelegt und eben- falls fixiert. Die Abstände zweier nebeneinander liegenden V-förmigen Nuten muß dabei den Abständen zweier übereinander liegender Nuten entsprechen.

In einem nächsten Schritt wird ein derartiger Stapel 2 mit einem Stapel 3 aus Mischerplättchen 3.11 bis 3.41 stirnseitig derartig verbunden, daß jede Gruppe von Lichtleitfasern (beispielsweise 1.1 bis 1.4) stirnseitig auf die schmale Kante eines Mischerplättchens (beispielsweise 3.11) trifft. Hierzu besteht der Stapel 3 aus einer periodischen Anordnung von gläsernen Mischerplättchen 3.11 und Distanzstücken 3.12. Ein gleichartiger Stapel 4 aus Mischerplättchen und Distanzstücken wird nun an dem den Lichtleitfasern 1 gegenüberliegenden Ende des Stapels 3 ebenfalls stirnseitig angekoppelt, wobei jedoch der Stapel 4 in seiner Schichtung um 90° gegenüber dem Stapel 3 gedreht ist.

An der ausgangsseitigen Stirnfläche des Stapels 4 wird dann analog zu der Verbindung zwischen den Stapeln 2 und 3 ein weiterer Stapel 5 aus matrixförmig zwischen Trägerplatten 5.1 bis 5.4 angeordneten Lichtleitfasern 6.1 bis 6.16 angekoppelt.

Bei einem Verhältnis aus Länge zu Breite eines Mischerplättchens von mindestens 10 wird so das Licht z.B. der Lichtleitfaser 1.1 über das Mischerplättchen 3.11 auf sämtliche Mischerplättchen 4.11 bis 4.41 gleichmäßig verteilt, worauf das anteilige Licht aus einem Mischerplättchen des Stapels 4 (z.B. 4.11) sich gleichmäßig auf die jeweils zugeordnete Gruppe (z.B. 5.1) der abgehenden Lichtleitfasern (z.B. 6.1 bis 6.4) verteilt. Damit enthält jede der abgehenden Lichtleitfasern 6.1 bis 6.16 einen gleichen Anteil des über eine der eingehenden Lichtleitfasern 1.1 bis 1.16 eingekoppelten Lichtes.

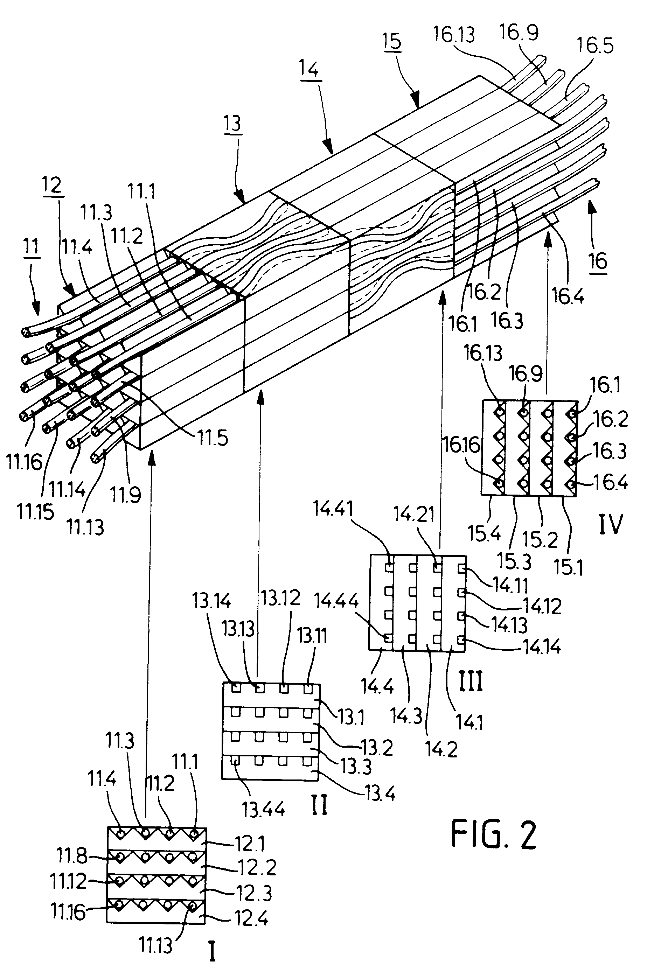

Bei dem in Figur 2 dargestellten Ausführungsbeispiel sind die Anordnungen der Lichtleiterstapel 12 und 15 im wesentlichen identisch mit den Stapeln 2 und 5 gemäß Figur 1. Die Stapel 13 und 14 bestehen jedoch nun aus gleichartigen, übereinander bzw. nebeneinander angeordneten integriert-optischen 4x4-Kopplern 13.1 bis 13.4 bzw. 14.1 bis 14.4. Derartige Koppler sind beispeisweise in "Laser- und Optoelektronik", 21(1)/1989, Seite 59, beschrieben. Die beiden Stapel von je vier 4x4-Kopplern 13 und 14 werden nun analog zu den Mischerplättchenstapeln 3 und 4 gemäß Figur 1 um 90° verdreht so aneinander gekoppelt, daß die Ausgänge des Stapels 13 exakt auf den Eingängen des Stapels 14 zu liegen kommen. Die Lichtleiterstapel 12 bzw. 15 müssen nun so bemessen sein, daß die Abstände der einzelnen Lichtleitfasern exakt mit den Abständen der lichtleitenden Kanäle innerhalb der jeweils zugeordneten Kopplerstapeln 13 bzw. 14 übereinstimmt. Entsprechend sorgfältig muß die Ankopplung des Lichtleiterstapels 12 an den Kopplerstapel 13 bzw. Lichtleiterstapel 15 an den Kopplerstapel 14 ausgeführt werden.

## Patentansprüche

1. Lichtmischer mit einem ersten Array aus einer ersten Anzahl von eingehenden Lichtleitfasern (1.1 - 1.16), deren Enden zeilenweise angeordnet sind, einem zweiten Array aus einer der ersten Anzahl entsprechenden Anzahl von abgehenden Lichtleitfasern (6.1 - 6.16), deren Enden ebenfalls zeilenweise angeordnet sind, und einer Mischerplättcheneinrichtung zur gleichmäßigen Aufteilung von Licht aus jeder eingehenden Lichtleitfaser auf die abgehenden Lichtleitfasern **dadurch gekennzeichnet,** daß jedes Array aus n x n Lichtleitfasern besteht, daß die Mischerplättcheneinrichtung aus 2n Mischerplättchen (3.11 - 3.41; 4.11 - 4.41) besteht, daß jeweils eine erste Stirnseite der einen Hälfte dieser Mischerplättchen (3.11 - 3.41) jeweils mit einer anderen Gruppe von jeweils n nebeneinander angeordneten eingehenden Lichtleitfasern (z.B. 1.1 - 1.4) und jeweils eine erste Stirnseite der anderen Hälfte (4.11 - 4.41) jeweils mit einer anderen Gruppe von jeweils n nebeneinander angeordneten abgehenden Lichtleitfasern (z.B. 6.1 - 6.4) optisch verbunden ist, daß die n Mischerplättchen (3.11 - 3.41) der eingehenden Lichtleitfasern (1.1 - 1.16) zu einem ersten Stapel (3) und die n Mischerplättchen (4.11 - 4.41) der abgehenden Lichtleitfasern (6.1 - 6.16) zu einem zweiten Stapel (4) jeweils deckungsgleich derart übereinander geschichtet und angeordnet sind, daß die freien, zweiten Stirnseiten der Mischerplättchen beider Stapel (3, 4) je eine Fläche bilden, wobei die beiden Stapel (3, 4) an diesen Flächen optisch miteinander verbunden sind und um eine auf diese Flächen normale Achse gegeneinander um 90° verdreht sind.

2. Lichtmischer nach Anspruch 1 **dadurch gekennzeichnet,** daß die Dicke eines Mischerplättchens (3.11-3.41; 4.11-4.41) etwa dem Kerndurchmesser einer Lichtleitfaser (1.1-11.6; 6.1-6.16) entspricht und das Verhältnis aus Länge und Breite eines Mischerplättchens etwa 10 oder größer ist.

3. Lichtmischer nach Anspruch 1 oder 2 , **dadurch gekennzeichnet,** daß die Lichtleitfasern (z.B. 1.1-1.4; 6.1-6.4) einer Gruppe in parallelen, V-förmigen Nuten einer Trägerplatte (z.B. 2.1; 5.1) angeordnet sind.

4. Lichtmischer mit einem ersten Array aus einer ersten Anzahl von eingehenden Lichtleitfasern (11.1 - 11.16), deren Enden zeilenweise angeordnet sind, einem zweiten Array aus einer der ersten Anzahl entsprechenden Anzahl von abgehenden Lichtleitfasern (16.1 - 16.16), deren Enden ebenfalls zeilenweise angeordnet sind, und einer integriert-optischen Kopplereinrichtung zur gleichmäßigen Aufteilung von Licht aus jeder eingehenden Lichtleitfaser auf die abgehenden Lichtleitfasern **dadurch gekennzeichnet,** daß jedes Array aus n x n Lichtleitfasern besteht, daß die Kopplereinrichtung aus 2n integriert-optischen Kopplern von Typ n x n (13.1 - 13.4; 14.1 - 14.4) besteht, daß jeweils eine erste Stirnseite der einen Hälfte dieser Koppler (13.1 - 13.4) jeweils mit einer anderen Gruppe von jeweils n nebeneinander angeordneten eingehenden Lichtleitfasern (z.B. 11.1 - 11.4) und jeweils eine erste Stirnseite der anderen Hälfte (14.1 - 14.4) jeweils mit einer anderen Gruppe von jeweils n nebeneinander angeordneten Lichtleitfasern (z.B. 16.1 - 16.4) optisch verbunden ist und, daß die n Koppler (13.1 - 13.4) der eingehenden Lichtleitfasern (11.1 - 11.16) zu einem ersten Stapel (13) und die n Koppler (14.1 - 14.4) der abgehenden Lichtleitfasern (16.1 - 16.16) zu einem zweiten Stapel (14) jeweils deckungsgleich derart übereinander geschichtet und angeordnet sind, daß die freien, zweiten Stirnseiten der Koppler beider Stapel (13, 14) je eine Fläche bilden, wobei die beiden Stapel (13, 14) an diesen Flächen optisch miteinander verbunden sind und um eine auf diese Flächen normale Achse gegeneinander um 90° verdreht sind.

## Claims

1. Light mixer comprising a first array of a first number of input optical fibres (1.1 - 1.16) the ends of which are arranged in lines, a second array of output optical fibres (6.1 - 6.16), which corresponds in numbers with those of the first array and the ends of which are also arranged in lines, and a mixer-platelet device for even division of light from each input optical fibre onto the output optical fibres, **characterised in that** each array comprises n x n optical fibres, that the mixer-platelet device comprises 2n mixer platelets (3.11 - 3.41; 4.11 - 4.41), that a respective first end of the one half of these mixer platelets (3.11 - 3.41) is optically connected to another group of respective n input optical fibres (for example 1.1 - 1.4) which are arranged alongside each other, and a respective first end of the other half (4.11 - 4.41) to another group of n output optical fibres (for example 6.1 - 6.4) which are arranged alongside each other, that the n mixer platelets (3.11 - 3.41) of the input optical fibres (1.1 - 1.16) are in a congruent manner stacked and arranged into a first stack (3), and so are the n mixer platelets (4.11 - 4.41) of the output optical fibres (6.1 - 6.16) into a second stack (4), that the free second ends of the mixer platelets of both stacks (3, 4) form a respective surface, in which respect both stacks (3, 4) are optically interconnected at these surfaces and turned against each other around a normal axis of these surfaces by 90°.

2. Light mixer according to claim 1, **characterised in that** the thickness of a mixer platelet (3.11 - 3.41; 4.11 - 4.41) approximately equals the core diameter of an optical fibre (1.1 - 11.6; 6.1 - 6.16), and the ratio of length and width of a mixer plate is approximately 10 or more.

3. Light mixer according to claim 1 or 2, **characterised in that** the optical fibres (for example 1.1 - 1.4; 6.1 - 6.4) of a group are arranged in parallel, V-shaped grooves of a carrier plate (for example 2.1; 5.1).

4. Light mixer comprising a first array of a first number of input optical fibres (11.1 - 11.16) the ends of which are arranged in lines, a second array of output optical fibres (16.1 - 16.16), which correspond in numbers with those of the first array and the ends of which are also arranged in lines, and an integrated optical coupling device of even division of light of each input optical fibre onto the output optical fibres, **characterised in that** each array comprises n x n optical fibres, that the coupling device is composed of 2n integrated optical couplers of the type n x n (13.1 - 13.4; 14.1 - 14.4), that a respective first end of the one half of these couplers (13.1 - 13.4) is optically connected to another group of respective n input optical fibres (for example 11.1 - 11.4) which are arranged alongside each other, and a respective first end of the other half (14.1 - 14.4) to another group of respective n optical fibres (for example 16.1 - 16.4), which are arranged alongside each other, that the n couplers (13.1 - 13.4) of the input optical fibres (11.1 - 11.16) are layered in a congruent manner and arranged to form a first stack (13), and so are the n couplers (14.1 - 14.4) of the output optical fibres (16.1 - 16.16) to form a second stack (14), that the free second ends of the couplers of both stacks (13, 14) form a respective surface, in which respect both stacks (13, 14) are optically interconnected at these surfaces and turned against each other around a normal axis of these surfaces by 90°.

## Revendications

1. Mélangeur de lumière comprenant un premier arrangement d'un premier nombre de fibres optiques entrantes (1.1 - 1.16) dont les extrémités sont disposées par lignes, un deuxième arrangement de fibres optiques sortantes (6.1 - 6.16) dont le nombre correspond au premier nombre et dont les extrémités sont également disposées par lignes, et un dispositif de plaquettes mélangeuses pour la répartition uniforme de lumière de chaque fibre optique entrante sur les fibres optiques sortantes, caractérisé par le fait que chaque arrangement se compose de n x n fibres optiques, que le dispositif de plaquettes mélangeuses se compose de 2n plaquettes mélangeuses (3.11 - 3.41; 4.11 - 4.41), qu'un premier côté frontal d'une moitié de ces plaquettes mélangeuses (3.11 - 3.41) est relié optiquement à un premier groupe de n fibres optiques entrantes (par exemple 1.1 - 1.4) disposées côte-à-côte et un premier côté frontal de l'autre moitié (4.11 - 4.41) est relié optiquement à un autre groupe de n fibres optiques sortantes (par exemple 6.1 - 6.4) disposées côte à côte, que les n plaquettes mélangeuses (3.11 - 3.41) des fibres optiques entrantes (1.1 - 1.16) sont superposées de façon congruente en une première pile (4) et les n plaquettes mélangeuses (4.11 - 4.41) des fibres optiques sortantes (6.1 - 6.16) sont superposées de façon congruante en une seconde pile (4), et sont disposées de telle manière que les seconds côtés frontaux libres des plaquettes mélangeuses des deux piles (3, 4) forment chacun une surface, les deux piles (3, 4) étant reliées optiquement entre elles à l'endroit de ces surfaces et étant décalées angulairement de 90° l'une par rapport à l'autre autour d'un axe normal à ces surfaces.

2. Mélangeur de lumière suivant la revendication 1, caractérisé par le fait que l'épaisseur d'une plaquette mélangeuse (3.11 - 3.41; 4.11 - 4.41) correspond à peu près au diamètre du noyau d'une fibre optique (1.1 - 1.16; 6.1 - 6.16) et que le rapport de la longueur par la largeur d'une plaquette mélangeuse est à peu près égal ou supérieur à 10.

3. Mélangeur de lumière suivant la revendication 1 ou 2, caractérisé par le fait que les fibres optiques (par exemple 1.1 - 1.4; 6.1 - 6.4) d'un groupe sont disposées dans des rainures parallèles à profil en V d'une plaque de support (par exemple 2.1; 5.1).

4. Mélangeur de lumière comprenant un premier arrangement d'un premier nombre de fibres optiques entrantes (11.1 - 11.16) dont les extrémités sont disposées par lignes, un deuxième arrangement de fibres optiques sortantes (16.1 - 16.16) dont le nombre correspond au premier nombre et dont les extrémités sont également disposées par lignes, et un dispositif de couplage optique intégré pour la répartition uniforme de lumière de chaque fibre optique entrante sur les fibres optiques sortantes, caractérisé par le fait que chaque arrangement se compose de n x n fibres optiques, que le dispositif de couplage se compose de 2n coupleurs optiques intégrés du type n x n (13.1 - 13.4; 14.1 - 14.4), qu'un premier côté frontal d'une moitié de ces coupleurs (13.1 - 13.4) est relié à un premier groupe de n fibres optiques entrantes (par exemple 11.1 - 11.4) disposées côte-à-côte et un premier côté frontal de l'autre moitié (14.1 - 14.4) est relié optiquement à un autre groupe de n fibres optiques sortantes (par exemple 16.1 - 16.4) disposées côte à côte, et que les n coupleurs (13.1 - 13.4) des fibres optiques entrantes (11.1 - 11.16) sont superposés de façon congruente en une première pile (13) et les n coupleurs (14.1 - 14.4) des fibres optiques sortantes (16.1 - 16.16) sont superposés de façon congruente en une seconde pile (14), et disposés de telle manière que les seconds côtés frontaux libres des coupleurs des deux piles (13, 14) forment chacun une surface, les deux piles (13, 14) étant reliées optiquement entre elles à l'endroit de ces surfaces et étant décalées angulairement de 90° l'une par rapport à l'autre autour d'un axe normal à ces surfaces.
